# EUROPEAN PATENT SPECIFICATION

(11) **EP 0 702 754 B1**
(45) Date of publication and mention of the grant of the patent: **02.12.1998**
(21) Application number: 94919010.2
(22) Date of filing: 10.06.1994
(51) Int. Cl.: F03D 7/06, F03B 3/14

(54) **A TURBINE FOR ROTATION UNDER THE INFLUENCE OF A FLOWING MEDIUM**
TURBINE ZUR ROTATION UNTER EINFLUSS EINES FLIESSENDEN MEDIUMS
TURBINE ENTRAINEE EN ROTATION PAR UN MILIEU EN ECOULEMENT

(30) Priority: 11.06.1993 NO 932150
(43) Date of publication of application: 27.03.1996
(73) Proprietor: JAKOBSEN, Einar, N-1920 Sorumsand (NO)
(72) Inventor: JAKOBSEN, Einar, N-1920 Sorumsand (NO)
(74) Representative: Rosenquist, Per Olof
(86) International application number: NO9400109
(87) International publication number: WO9429590

(56) References cited:
- WO-A-82/04289
- SE-B- 433 648
- SE-B- 440 121
- US-A- 4 052 134

## Description

The present invention relates to a turbine for rotation about an axis of rotation under the influence of a flowing medium, especially a wind turbine having a vertical axis of rotation, comprising a number of wings having longitudinal axes substantially parallel with the turbine axis, the wings by means of supporting elements being rotatably mounted about their longitudinal axis at a distance from the turbine axis, to move in a path thereabout under the influence of the flowing medium, each of the wings being provided with a returning means acting on the wings with a resilient force seeking to move the wings towards a natural position with the leading edge of the wings pointing in their movement direction in said path, the wings being rotatable 360° about their longitudinal axis during operation.

During the latest 10 to 20 years there have been installed a great number of wind turbines for production electrical power. The most common turbines are the wind turbines having horizontal axes the operation of which is based on the ancient wind mill principle. These turbines are incumbered with some drawbacks which may be summarized as follows: The wind turbine must have a device turning the turbine to the correct position relative to the wind direction. The generator for electrical power is arranged at a high level relative to the ground, and it must be rotated together with the turbine, so that one may not have a cable directly from the generator. The wings of the turbine are expensive and critical to manufacture. A high velocity at the periphery of the wings may cause an unpleasant noise. The turbine must be stopped at high wind velocities in order not to be destroyed.

Wind turbines having a vertical axis have a number of advantages as compared to those having a horizontal axis, and from these the following may be mentioned: The turbines function equally well in all wind directions. The generator may be placed at a low level, and it is stationary. The wings of the turbine are simple to produce, and they have the same profile over their entire length. The wings may be driven with a moderate velocity which produces little noise.

A wind turbine of the type mentioned in the preamble of this specification is previously known through US,A,4,052,134. In this known turbine each of the vanes/wings are provided with a return means which comprises a spring which seeks to move the wing back to a stable position in which it is kept in a tangential position relative to the turbine periphery. Further, a shock absorbing means is provided for braking the swinging motions caused by the wind away from their tangential position. In some of the embodiments shown this means comprises a sealed fluidum filled cylinder with a piston creating fluidum filled chambers on opposite sides thereof, and with a metering passage and a check valve which creates a communication between the chambers, wherein the metering passage creates a damping limited flow through it as a reaction on increasing wind load on the wing, and where the check valve freely let fluid through it when the wind load on the wing decreases and its return spring seeks to move the wing back to its tangential position. The fluidum filled cylinders are thus used for damping the wing movements, and in such a way that the damping is substantially bigger at the movement of the wings away from the tangential position than at movement back to this position. The existing spring force cannot be adjusted under the operation of the wind turbine, and the return forces on the wings can thus not be adjusted for optimal trimming of the wing depending on the wind conditions.

The object of the invention is to provide a turbine of the kind mentioned above, that makes possible an optimal yield under varying operation conditions, in that the return force on the wings is adjustable, so that the wings can be trimmed to give the best possible yield under the prevailing conditions.

For achievement of the above-mentioned objects there is provided a turbine of the introductorily stated type which, according to the invention, is characterized in that the returning means cooperates with a force-exerting means exerting on the returning means an adjustable force which, during operation, is adjustable to a value which can be varied from zero up to a desired maximum value, so that the returning force on the wings can be set to a desired value according to the current working conditions.

The principle of the invention may also be used in a turbine which is located in a flowing medium other than air, and for example is submerged in water. In this case the turbine may have horizontally or vertically oriented axis of rotation.

The invention will be further described below in connection with exemplary embodiments with reference to the drawings, wherein
Fig. 1 shows a schematic perspective view of a three-wing vertical-axis turbine according to the invention;
Fig. 2 shows a first embodiment of a force-exerting and returning means according to the invention;
Fig. 3 shows a plan view of the returning means in Fig. 2 on a larger scale;
Fig. 4 shows a second embodiment of the force-exerting and returning means;
Fig. 5 shows a third embodiment of the force-exerting and returning means;
Fig. 6 shows a fourth embodiment of the force-exerting and returning means;
Figs. 7 and 8 show schematic views of a four-blade wind turbine viewed from above, under various wind conditions;
Fig. 9 shows a schematic view of a first embodiment of a water turbine according to the invention, viewed slantwise from below; and
Fig. 10 shows a perspective view of a second embodiment of a water turbine according to the invention.

In the various Figures corresponding elements are designated by the same reference numerals.

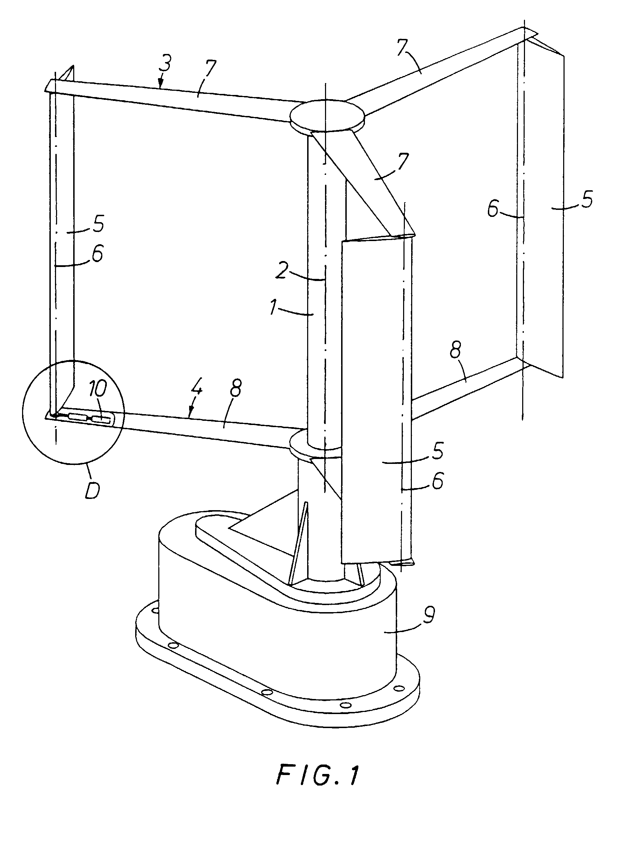

The schematic view in Fig. 1 shows a turbine having a vertical shaft 1 which is mounted about an axis of rotation 2 and to which there are fastened an upper and a lower supporting element 3 and 4, respectively, for rotatable mounting of three turbine wings 5 so that the wings are rotatable about respective longitudinal axes 6 which are shown to be parallel with the turbine axis 2. As shown, the supporting elements 3, 4 consist of three pairs of radially directed arms 7, 8, where the wings 5 are mounted at the outer ends of the arms, so that the wings move in a circular path about the turbine axis 2. This circular path defines the periphery of the turbine. The centre of gravity of the wings is located in their axis of rotation 6, whereas the balance point for the lift of the wings is located in or rearwardly of this axis. The base 9 of the turbine contains a suitable gearing and an electric generator (not shown).

The wings 5 of the turbine is mounted such that they can turn completely around its longitudinal/rotational axis during operation. The wings are provided with a returning means which cooperates with a force-exerting means (detail D on Fig. 1) and which under operation seeks to move the wings towards a natural position with the leading edge of the wings pointing in their direction of movement in the above mentioned circular path. Under the action of wind the wings will position themselves with the leading edge against the wind under the presupposition that the force-exerting means does not exert any force on the wing. The wind turbine will then be in its stop-position. When the force-exerting means is actuated the wings will be forced back to the natural position as soon as an external wind force action ceases.

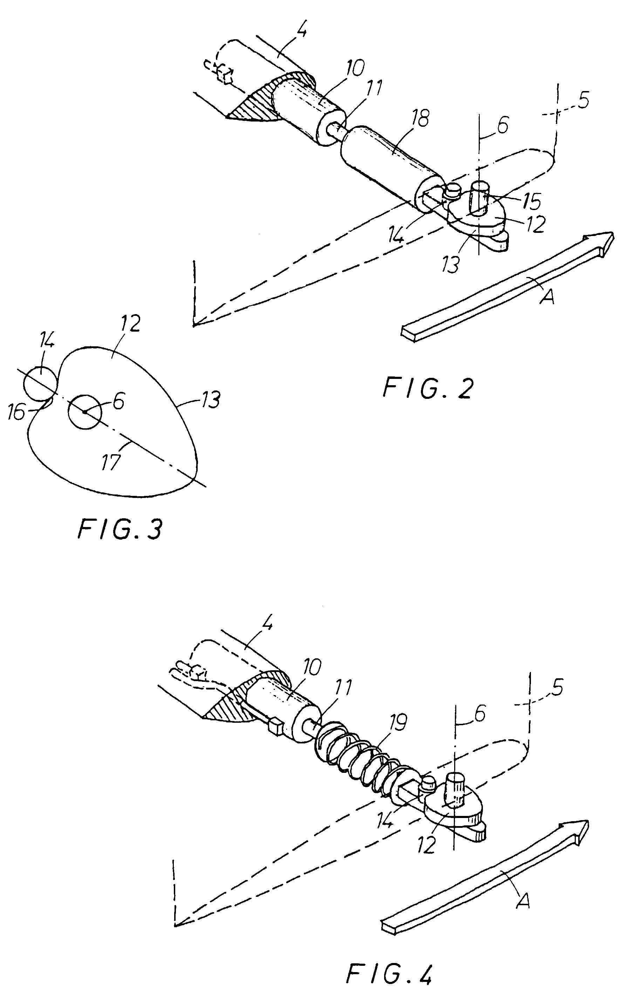

Fig. 2 shows a first embodiment of the force-exerting and returning means. In the Figure, a wing 5 is suggested with dashed lines, and an arrow A shows the movement direction of the wing. The force-exerting means is arranged at the lower end of the wing and consists of a hydraulic or pneumatic cylinder 10 which is mounted in the supporting element 4 (shown sectioned) and which is coupled through a piston rod 11 to the wing-returning means. This consists of a cam disc 12 which, in the illustrated embodiment, is symmetrical and has an essentially heart-shaped cam surface 13, and which cooperates with a camactuating member in the form of roller 14 which is rotatably mounted on the piston rod 11. As suggested by a pin 15, the heart-shaped disc 12 is rigidly fastened to the wing 5 and turns around together therewith about the axis of rotation 6 of the wing.

In Fig. 2 the wing 5 is shown in its normal position wherein its leading edge points in the movement direction, and wherein the roller 14 is pressed against the re-entrant portion of the cam surface 13 defined by the heart-shaped of the disc. The arrangement is shown more in detail in the plan view in Fig. 3 wherein the re-entrant portion of the cam surface 13 is designated by 16. As shown, the disc 12 is fastened to the wing in such a position that the axis of rotation 6 of the wing intersects the axis of symmetry 17 of the disc at a point located closer to the re-entrant cam surface portion 16 of the disc than the remaining points on the cam surface 13. With other words, the disc has an increasing "radius" from the point wherein the axis of symmetry 17 intersects the re-entrant portion 16, with a maximum radius 180° from this point. This entails that the disc 12 and the wing 5 have only one stable position when the roller 14 is pressed against the disc by the pneumatic cylinder 10, viz. said normal position.

The disc 12 may be designed with different shapes enabling a desired returning force of the disc in relation to the excursion of the wing from the normal position.

The disc may also be executed such that it has a constant radius in the rear part of the disc, so that the wing is loose and is not influenced by any returning force along a part of its path of rotation when it turns all the way round. The disc 12 is shown to be symmetrical, but there may also be used an unsymmetrical disc.

As shown in Fig. 2, a weight 18 is arranged on the piston rod 11, so that the weight in influenced by a centrifugal force when the wing moves in its path. The weight 18 acts upon the roller 14, so that said centrifugal force increases the force against the roller and the disc 12. This results in that a larger wind force is required against the wing to bring it out from the normal position.

In Fig. 4 there is shown an embodiment which essentially corresponds to the embodiment in Fig. 2, but wherein, instead of the weight 18, there is arranged a helical spring 19 pressing against the roller 14 and the disc 12. The spring pressure may be adjusted by means of the position of the piston (not shown) in the hydraulic or pneumatic cylinder 10.

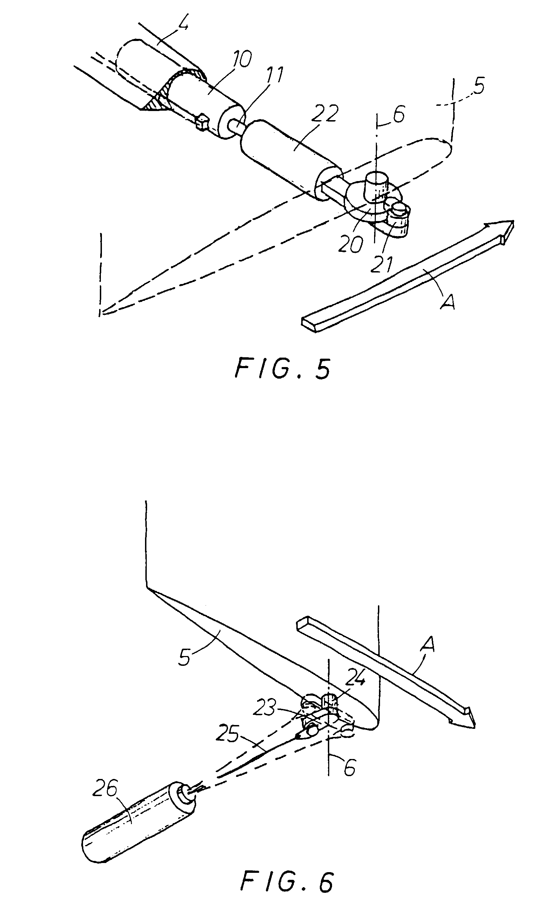

Fig. 5 shows an embodiment which in essential features is similar to the embodiment according to Fig. 2, but wherein a heart-shaped cam disc 20 has been turned around 180° relative to the cam disc 12 in Fig. 2, and wherein a disc-influencing roller 21 is arranged at the "outside" or opposite side of the disc 20 relative to the hydraulic or pneumatic cylinder 10. The cylinder 10 here exerts a pulling force on the roller 21, so that this is pressed against the disc 20 to move the wing back to the normal position in case of excursions therefrom. Also in this embodiment a weigh 22 influenced by a centrifugal force is arranged on the piston rod 11. In this embodiment, however, the centrifugal force reduces the pressure from the roller 21 against the disc 20 with increasing velocity of the wind turbine. This results in a limitation of the number of revolutions per minute.

Fig. 6 shows a simple means for achieving a returning force on the wing 5. In this embodiment a crank arm 23 at one end thereof is fastened to the wing 5 through a pin 24, so that the crank arm turns about the axis of rotation 6 of the wing, and the other end of the crank arm is connected by a suitable coupling means, in the illustrated case a cord 25, to a solenoid 26 having a movable iron core (not shown). The solenoid 26 here exerts a pulling force on the crank arm 23 and thus produces a returning force of the wing 5. The returning force on the wing may be adjusted by adjusting the current in the solenoid.

In the wind turbine according to the invention all the wings preferably will be equipped with the same type of force-exerting and returning means, so that one has the same control on all wings. It will be clear that the resilient returning force may be achieved in many different ways, instead of using a hydraulic or pneumatic actuator, as described above. For example, the force may be produced and controlled electro-mechanically, or also manually. However, the use of hydraulic or pneumatic actuators is advantageous, since they are adapted to be connected in parallel, for influencing all wings in parallel and with the same force, and to be controlled from a central location. The force from the actuator then may be varied from zero up to a desired maximum value. The wind turbine may be stopped by reducing the returning force on the wings to zero.

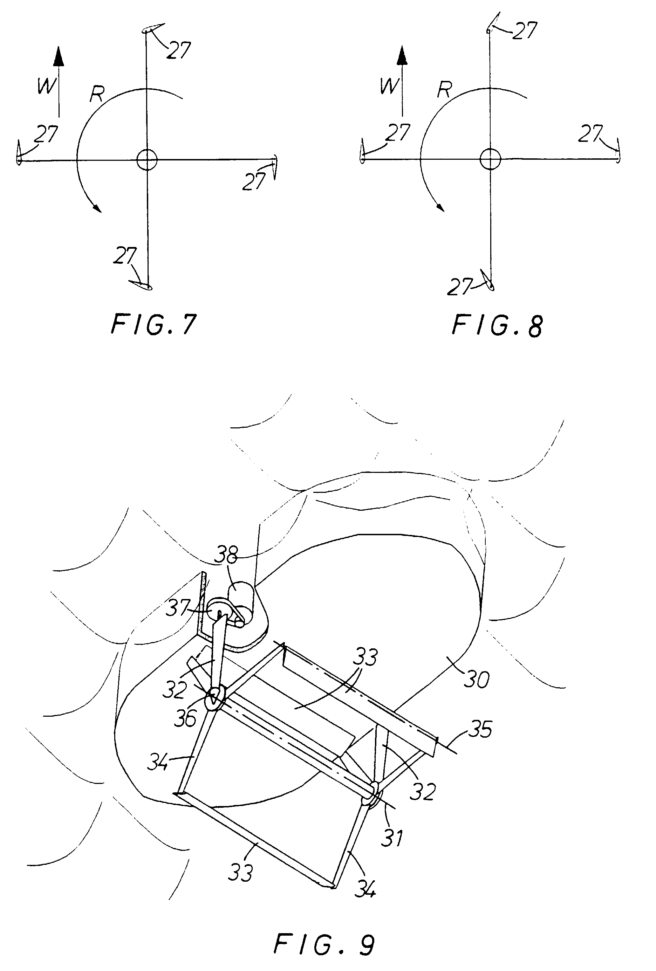

Figs. 7 and 8 show schematic view of a four-blade wind turbine viewed from above, wherein the direction of rotation of the turbine is indicated by an arrow R and the wind direction is indicated by an arrow W. In Fig. 7 the peripheral velocity of the turbine, i.e. the path velocity of the wings 27, is much higher than the wind velocity. In Fig. 8, on the other hand, the wind velocity is much higher than the peripheral velocity of the turbine. Some of the wings 27 then are rotated all the way round, so that the leading edge of all wings in all essentials points against the wind.

Fig. 9 shows a schematic view of a turbine according to the invention which is placed flowing water. The turbine is shown to be mounted at the underside of a suitably anchored float 30, and in this case is placed with its axis of rotation 31 horizontally oriented. The turbine is carried by arms 32 fastened to the underside of the float 30. The turbine has three wings 33 which, at the outer ends of supporting arms 34, are rotatably mounted about longitudinal axis 35 which are parallel with the turbine axis. A bevel gear drive 36 transmits the rotational force of the turbine to a gearing 37 driving an electric generator 38. In other respects the turbine is constructed and works in a manner corresponding to that of the previously described wind turbine.

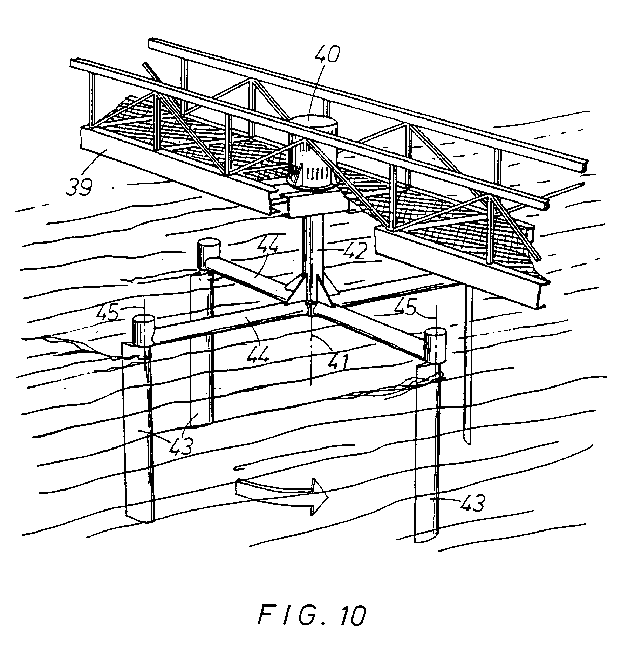

Another embodiment of a turbine according to the invention which is placed in flowing water, is shown in Fig. 10. The turbine here has a vertically oriented axis of rotation, and corresponds to an embodiment wherein the previously described wind turbine is turned upside down. The wings of the turbine are shown to be working with their noses pointing essentially forwards and against the water current, the peripheral speed of the wings being lower than the speed of the water current. As shown, the turbine is arranged at the underside of a supporting structure in the form of a gangway or a deck 39 supporting the electric generator 40 of the turbine. As mentioned, the turbine has a vertical axis of rotation 41 and is carried by a downwards depending column 42 fastened to the deck 39. The turbine has four blades 43 which, at the outer ends of supporting arms 44, are rotatably mounted about longitudinal axis 45 which are parallel with the turbine axis 41. Also this turbine in other respects is constructed and operates in a manner corresponding to that of the turbines described above.

## Claims

1. A turbine for rotation about an axis of rotation disposed essentially transverse to the direction of a flowing medium, especially a wind turbine having a vertical axis of rotation, comprising a number of wings (5) having longitudinal axes (6) essentially parallel with the turbine axis (2), the wings (5) by means of supporting elements (3, 4) being rotatably mounted about their longitudinal axis (6) at a distance from the turbine axis (2), to move in a path thereabout under the influence of the flowing medium, each of the wings being provided with a returning means (12; 23) acting on the wings (5) with a resilient force seeking to move the wings towards a natural position with the leading edge of the wings (5) pointing in their movement direction in said path, the wings (5) being rotatable 360° about their longitudinal axis during operation, **CHARACTERIZED IN** that the returning means (12; 23) cooperates with a force-exerting means (10, 14; 25, 26) exerting on the returning means an adjustable force which, during operation, is adjustable to a value which can be varied from zero up to a desired maximum value, so that the returning force on the wings (5) can be set to a desired value according to the current working conditions.

2. A turbine according to claim 1, **CHARACTERIZED IN** that the force-exerting means (10, 14) is arranged to act upon all wings (5) in parallel and with the same force, and to be controlled from a central place.

3. A turbine according to claim 1 or 2, **CHARACTERIZED IN** that the returning means comprises a cam disc (12) having an essentially heart-shaped cam surface (13) with a re-entrant portion (16) defining said stable position, and wherein the cam disc (12) cooperates with a cam-actuating member (14) contacting the cam surface (13) under the influence of the force-exerting means (10), the disc (12) being fastened to one end of the wing (5) so that the axis of rotation (6) of the wing intersects the longitudinal axis (17) of the disc at a point located closer to the re-entrant cam surface portion (16) of the disc (12) than the remaining points on the cam surface (13).

4. A turbine according to claim 3, **CHARACTERIZED IN** that the force-exerting means is a hydraulic or pneumatic actuator (10).

5. A turbine according to claim 4, **CHARACTERIZED IN** that a helical spring (19) is connected between the actuator (10) and the cam-influencing member (14).

6. A turbine according to claim 4, **CHARACTERIZED IN** that the actuator (10) comprises a piston rod (11) acting on the cam-influencing member (14) by exerting a compressive force thereon, a centrifugal-force influenced weight (18) being placed on the piston rod (11), which weight, with a an increasing path velocity of the wings (5), increases the force from the actuator (10).

7. A turbine according to claim 4, **CHARACTERIZED IN** that the actuator (10) comprises a piston rod (11) acting on the cam-influencing member (14) by exerting a compressive force thereon, a centrifugal-force influenced weight (22) being placed on the piston rod (11), which weight, with an increasing path velocity of the wings (5), reduces the force from the actuator (10).

8. A turbine according to claim 1 or 2, **CHARACTERIZED IN** that the returning means comprises a crank arm (23) of which one end is fastened to the axis of rotation (6) of the wing (5), and the other end of which is connected to a force-exerting means in the form of a solenoid (26) having an iron core exerting a pulling force on the crank arm (23) in dependence on the current through the solenoid (26).

## Patentansprüche

1. Turbine, die um eine im wesentlichen quer zur Strömungsrichtung eines Mediums angeordnete Drehachse drehbar ist, insbesondere eine Windturbine mit einer vertikalen Drehachse, die eine Anzahl von Flügeln (5) aufweist mit jeweils einer Längsachse (6), die im wesentlichen parallel zur Turbinenachse (2) liegt, wobei die Flügel (5) mit Hilfe von Halteelementen (3, 4) drehbar um ihre Längsachse (6) in einem Abstand von der Turbinenachse (2) befestigt sind, so daß sie sich unter dem Einfluß des strömenden Mediums auf einer Bahn um diese bewegen, wobei jeder der Flügel mit einer Rückstelleinrichtung (12; 23) versehen ist, die mit einer Federkraft auf die Flügel (5) wirkt und die Flügel in eine Normalstellung zu bewegen versucht, in der die Vorderkante der Flügel (5) in deren Bewegungsrichtung auf der Bahn zeigt, wobei die Flügel (5) während des Betriebs 360° um ihre Längsachse drehbar sind, **DADURCH GEKENNZEICHNET, DASS** die Rückstelleinrichtung (12; 23) mit einer kraftausübenden Einrichtung (10, 14; 25, 26) zusammenwirkt, die eine einstellbare Kraft auf die Rückstelleinrichtung ausübt, die während des Betriebs auf einen zwischen Null und einem gewünschten Maximalwert variierbaren Wert einstellbar ist, so daß die auf die Flügel (5) wirkende Rückstellkraft entsprechend der jeweils herrschenden Arbeitsbedingungen auf einen gewünschten Wert einstellbar ist.

2. Turbine nach Anspruch 1, **DADURCH GEKENNZEICHNET, DASS** die kraftausübende Einrichtung (10, 14) so angeordnet ist, daß sie auf alle Flügel (5) parallel und mit der gleichen Kraft wirkt, und von einem zentralen Punkt aus steuerbar ist.

3. Turbine nach Anspruch 1 oder 2, **DADURCH GEKENNZEICHNET, DASS** die Rückstelleinrichtung eine Nockenscheibe (12) aufweist mit einer im wesentlichen herzförmigen Nockenfläche (13) mit einem einspringenden Abschnitt (16), der eine stabile Lage definiert, wobei die Nockenscheibe (12) mit einem Nocken-Betätigungsglied (14) zusammenwirkt, das unter dem Einfluß der kraftausübenden Einrichtung (10) mit der Nockenfläche (13) in Berührung kommt, und die Scheibe (12) an einem Ende des Flügels (5) befestigt ist, so daß die Drehachse (6) des Flügels die Längsachse (17) der Scheibe in einem Punkt schneidet, der näher an dem einspringenden Nockenflächen-Abschnitt (16) der Scheibe (12) liegt als die übrigen Punkte der Nockenfläche (13).

4. Turbine nach Anspruch 3, **DADURCH GEKENNZEICHNET, DASS** die kraftausübende Einrichtung ein hydraulischer oder pneumatischer Stellantrieb (10) ist.

5. Turbine nach Anspruch 4, **DADURCH GEKENNZEICHNET, DASS** eine Schraubenfeder (19) zwischen dem Stellantrieb (10) und dem auf den Nocken wirkenden Glied (14) vorgesehen ist.

6. Turbine nach Anspruch 4, **DADURCH GEKENNZEICHNET, DASS** der Stellantrieb (10) eine Kolbenstange (11) aufweist, die durch Ausüben einer Druckkraft auf das auf den Nocken wirkende Glied (14) wirkt, wobei ein dem Fliehkrafteinfluß unterliegendes Gewicht (18) auf der Kolbenstange (11) angeordnet ist, und dieses Gewicht mit einer zunehmenden Bahngeschwindigkeit der Flügel (5) die von dem Stellantrieb (10) erzeugte Kraftwirkung verstärkt.

7. Turbine nach Anspruch 4, **DADURCH GEKENNZEICHNET, DASS** der Stellantrieb (10) eine Kolbenstange (11) aufweist, die durch Ausüben einer Druckkraft auf das auf den Nocken wirkende Glied (14) wirkt, wobei ein dem Fliehkrafteinfluß unterliegendes Gewicht (22) auf der Kolbenstange (11) angeordnet ist, und dieses Gewicht mit einer zunehmenden Bahngeschwindigkeit der Flügel (5) die von dem Stellantrieb (10) erzeugte Kraftwirkung verringert.

8. Turbine nach Anspruch 1 oder 2, **DADURCH GEKENNZEICHNET, DASS** die Rückstelleinrichtung einen Kurbelarm (23) aufweist, dessen eines Ende auf der Drehachse (6) des Flügels (5) befestigt ist, und dessen anderes Ende mit einer kraftausübenden Einrichtung in der Form eines Elektromagneten (26) verbunden ist, der einen Eisenkern aufweist, welcher in Abhängigkeit von dem Stromfluß durch den Elektromagneten (26) eine Zugkraft auf den Kurbelarm (23) ausübt.

## Revendications

1. Turbine destinée à tourner autour d'un axe de rotation disposé de façon essentiellement transversale à la direction d'un milieu en écoulement, en particulier une turbine éolienne présentant un axe de rotation vertical, comprenant un certain nombre d'ailes (5) présentant des axes longitudinaux (6) essentiellement parallèles à l'axe (2) de la turbine, les ailes (5), au moyen d'éléments de support (3, 4), étant montées avec possibilité de rotation autour de leur axe longitudinal (6) à une certaine distance de l'axe (2) de la turbine, afin de se déplacer sur un trajet autour de celui-ci sous l'influence du milieu en écoulement, chacune des ailes étant munie d'un moyen de rappel (12 ; 23) agissant sur les ailes (5) avec une force élastique tendant à déplacer les ailes vers une position naturelle, le bord d'attaque des ailes (5) pointant dans la direction de leur déplacement sur ledit trajet, les ailes (5) pouvant être tournées de 360° autour de leur axe longitudinal pendant la mise en oeuvre, CARACTERISEE en ce que le moyen de rappel (12 ; 23) coopère avec un moyen d'application de force (10, 14 ; 25, 26) appliquant sur le moyen de rappel une force réglable qui, pendant la mise en oeuvre, peut être réglée à une valeur que l'on peut faire varier depuis zéro jusqu'à une valeur maximum désirée, de sorte que la force de rappel sur les ailes (5) peut être établie à une valeur désirée en fonction des conditions de fonctionnement en cours.

2. Turbine selon la revendication 1, CARACTERISEE en ce que le moyen d'application de force (10, 14) est conçu pour agir sur toutes les ailes (5) en parallèle et avec la même force, et pour être commandé depuis un emplacement central.

3. Turbine selon la revendication 1 ou 2, CARACTERISEE en ce que le moyen de rappel comprend un disque à came (12) présentant une surface de came essentiellement en forme de coeur (13), présentant une partie rentrante (16) définissant ladite position stable, et dans laquelle le disque à came (12) coopère avec un élément de commande de came (14) venant en contact avec la surface de came (13) sous l'influence du moyen d'application de force (10), le disque (12) étant fixé à une extrémité de l'aile (5) de façon que l'axe de rotation (6) de l'aile intersecte l'axe longitudinal (17) du disque en un point situé plus près de la partie de surface de came rentrante (16) du disque (12) que les points restants sur la surface de came (13).

4. Turbine selon la revendication 3, CARACTERISEE en ce que le moyen d'application de force est un actionneur hydraulique ou pneumatique (10).

5. Turbine selon la revendication 4, CARACTERISEE en ce qu'un ressort hélicoïdal (19) est fixé entre l'actionneur (10) et l'élément d'actionnement de came (14).

6. Turbine selon la revendication 4, CARACTERISEE en ce que l'actionneur (10) comprend une tige de piston (11) agissant sur l'élément d'actionnement de came (14) en exerçant une force de compression sur celui-ci, une masse influencée par la force centrifuge (18) étant placée sur la tige de piston (11), laquelle masse, en présence d'une vitesse croissante des ailes (5) sur leur trajet, augmente la force exercée par l'actionneur (10).

7. Turbine selon la revendication 4, CARACTERISEE en ce que l'actionneur (10) comprend une tige de piston (11) agissant sur l'élément d'actionnement de came (14) en exerçant une force de compression sur celui-ci, une masse influencée par la force centrifuge (22) étant placée sur la tige de piston (11), laquelle masse, en présence d'une vitesse croissante des ailes (5) sur leur trajet, réduit la force exercée par l'actionneur (10).

8. Turbine selon la revendication 1 ou 2, CARACTERISEE en ce que le moyen de rappel comprend un bras de manivelle (23) dont une première extrémité est fixée à l'axe de rotation (6) de l'aile (5), et dont l'autre extrémité est reliée à un moyen d'application de force sous la forme d'un électroaimant (26) comportant un noyau plongeur exerçant une force de traction sur le bras de manivelle (23) en fonction du courant circulant dans l'électroaimant (26).
